## Europäisches Patentamt
## European Patent Office
## Office européen des brevets

(19)

(11) Veröffentlichungsnummer: **0 205 798**
**B1**

(12) **EUROPÄISCHE PATENTSCHRIFT**

(45) Veröffentlichungstag der Patentschrift:
**12.07.89**

(21) Anmeldenummer: **86105256.1**

(22) Anmeldetag: **16.04.86**

(51) Int. Cl.⁴: **G 01 F 23/22**, G 01 F 23/04 //
F01M11/12

(54) **Einrichtung zur elektrischen Ölfüllstandsüberwachung, insbesondere in Kraftfahrzeug-Verbrennungsmotoren.**

(30) Priorität: **05.06.85 DE 3520126**

(43) Veröffentlichungstag der Anmeldung:
**30.12.86 Patentblatt 86/52**

(45) Bekanntmachung des Hinweises auf die Patenterteilung:
**12.07.89 Patentblatt 89/28**

(84) Benannte Vertragsstaaten:
**DE FR GB IT NL SE**

(56) Entgegenhaltungen:
**DD-A-75 407**
**DD-A-221 831**
**DE-A-3 134 912**
**DE-B-1 281 699**
**GB-A-2 037 990**

(73) Patentinhaber: **VDO Adolf Schindling AG,
Gräfstrasse 103, D-6000 Frankfurt/Main 90 (DE)**

(72) Erfinder: **Benda, Franz, Massbornstrasse 23, D-6000
Frankfurt/Main 56 (DE)**

(74) Vertreter: **Klein, Thomas, Dipl.- Ing. (FH), Sodener
Strasse 9 Postfach 6140, D-6231 Schwalbach a.
Ts. (DE)**

LIBER, STOCKHOLM 1989

**Beschreibung**

Die Erfindung betrifft eine Einrichtung zur elektrischen Ölfüllstandsüberwachung insbesondere in Kraftfahrzeug-Verbrennungsmotoren.

Bei derartigen bekannten Einrichtungen wird als temperaturabhängiges Widerstandselement z. B. ein Widerstand mit positivem Temperaturkoeffizienten (PTC) benutzt, der in Perlenform in Glas gekapselt sein kann. Über Zuleitungen kann das temperaturabhängige Widerstandselement an eine Auswertungsschaltungsanordnung mit Stromquelle angeschlossen werden, mit der die an dem Widerstandselement herrschende Temperatur in ein elektrisches Signal umgewandelt werden kann. Dabei wird ausgenutzt, daß das Widerstandselement, je nachdem, wie weit es in ein besser wärmeleitendes Medium - Öl - als Luft eintaucht, mehr oder weniger Wärme an seine Umgebung abgibt, die durch den durch das Widerstandselement fließenden Strom erzeugt wird. Wenn beispielsweise das Widerstandselement in Öl eintaucht, erfolgt eine weitgehende Wärmeabgabe und die Temperatur des Widerstandselements ist entsprechend niedrig. Dem entspricht ein verhältnismäßig niedriger Widerstand und kleiner Spannungsabfall an dem temperaturabhängigen Widerstandselement bzw. einem großen Spannungsabfall an einem dazu in Reihe angeordneten ohm'schen Widerstandselement. Liegt hingegen das temperaturabhängige Widerstandselement in Luft, so erfolgt nur eine geringe Wärmeabgabe, und das Widerstandselement wird auf eine vergleichsweise hohe Temperatur aufgeheizt. Wegen des dann höheren Widerstandswerts des temperaturabhängigen Widerstandselements fällt an diesem eine relativ große Spannung ab, und an dem in Reihe liegenden ohm'schen Widerstand fällt eine entsprechende Spannung ab, die ausgewertet werden kann. Die dazu vorgesehene Auswertungsschaltungsanordnung kann eine Brückenschaltung aufweisen, in deren einem Brückenzweig der temperaturabhängige Widerstand angeordnet ist und in deren Nullzweig Steueranschlüsse eines Verstärkers, insbesondere eines Transistors, liegen, der bei wenigstens einer Schaltschwelle umschaltet. Der Verstärker schaltet insbesondere bei dieser Schaltschwelle um, wenn ein vorbestimmter Füllstand unterschritten wird. Bei einer etwas höher liegenden Schaltschwelle kann wiederum eine Umschaltung erfolgen, wenn der Ölfüllstand über das Niveau ansteigt, bei der die erste Umschaltung erfolgte. Es kann so das Unterschreiten einer vorbestimmten Ölmenge in einem Verbrennungsmotor signalisiert werden, wozu eine Leuchtdiode dienen kann.

Diese bekannten Einrichtungen zur elektrischen Ölfüllstands-Überwachung arbeiten jedoch nur in einem verhältnismäßig engen Temperaturbereich, wenn keine besonderen Kompensationsmaßnahmen getroffen werden. Dies beruht darauf, daß bei steigender Temperatur der Umgebung, bzw. des Öls, der Spannungsabfall an einem dem temperaturabhängigen Widerstand vorgeschalteteten ohm'schen Widerstand immer kleiner wird, und daß auch die Differenz der Spannungsabfälle an dem vorgeschalteten ohm'schen Widerstand sich für die Betriebsfälle des eingetauchten und des ausgetauchten temperaturabhängigen Widerstands verringert. Um die Bauchbarkeit der bekannten Einrichtungen zur elektrischen Ölfüllstandsüberwachung für einen größeren Temperaturbereich zu erweitern ist es auch bekannt, den Ansprechpegel des Verstärkers der Auswertungsschaltungsanordnung temperaturabhängig nachzuführen. Für diese Temperaturkompensation kann ein weiterer temperaturabhängiger Widerstand so angeordnet werden, daß er von dem zu überwachenden Fluid, dem Öl, umgeben ist. Jedoch bereitet die Unterbringung des weiteren temperaturabhängigen Widerstands in dem begrenzten Hohlraum eines hohl ausgebildeten Ölmeßstabs Schwierigkeiten, insbesondere wenn der Ölmeßstab schon ein zweites Widerstandselement beherbergt, welches Teil einer Einrichtung zur Temperaturmessung des Öls ist.

Der vorliegenden Erfindung liegt die Aufgabe zugrunde, den zuverlassig verwendbaren Arbeitsbereich einer Einrichtung zur elektrischen Füllstandsüberwachung der eingangs genannten Gattung für größere Umgebungstemperaturschwankungen zu erweitern, und zwar ohne die Notwendigkeit, einen weiteren temperaturabhängigen Widerstand in dem Ölmeßstab unterzubringen.

Diese Aufgabe wird durch die Ausbildung der Einrichtung zur elektrischen Ölfüllstandsüberwachung mit den in dem Anspruch 1 angegebenen Merkmalen gelöst.

Erfindungsgemäß wird zur Anpassung der Schaltschwelle der Ölfüllstandsüberwachungseinrichtung von dem zweiten temperaturabhängigen Widerstandselement Gebrauch gemacht, welches zur Anzeige der Temperatur des Öls ohnehin vorgesehen ist. Es ist also nicht mehr notwendig, nur zur Nachführung der Schaltschwelle ein weiteres temperaturabhängiges Widerstandselement in dem verhältnismäßig kleinen Hohlraum eines Ölmeßstabs unterzubringen.

Die erfindungsgemäße Einrichtung zeichnet sich also durch einen vergrößerten Temperaturbereich aus, in dem das Unterschreiten einer vorgegebenen Ölfüllstandsmenge zuverlässig angezeigt wird. Der zweite temperaturabhängige Widerstand erhält somit eine Doppelfunktion - Anzeige der Öltemperatur sowie Nachführung der Schaltschwelle in Abhängigkeit von der Öltemperatur.

Wenn die Einrichtung zur elektrischen Ölfüllstandsüberwachung mit einer Brückenschaltung aufgebaut ist, in deren Nullzweig Steueranschlüsse eines Transistors liegen, insbesondere die Basis-Emitterstrecke, und in deren einem Brückenzweig der erste temperaturabhängige Widerstand angeordnet ist, so kann die Anpassung der Schaltschwelle des Transistors zweckmäßig durch Anschluß des zweiten temperaturabhängigen Widerstands an einen der Brückenzweige erfolgen, in dem der erste temperaturabhängige Widerstand nicht liegt.

Besonders zweckmäßig besteht das zweite temperaturabhängige Widerstandselement, welches zur Öltemperaturmessung vorgesehen ist, aus einem NTC-Widerstand, der zur Ölfüllstandskontrolle in einem weiten Temperaturbereich dem Emitterwiderstand des npn-Transistors als Schalttransistor parallel geschaltet wird.

Die Umschaltung des zweiten temperaturabhängigen Widerstands erfolgt vorteilhaft mit einem Tastschalter, durch den der zweite temperaturabhängige Widerstand an einen der Brückenzweige bzw. den Emitterwiderstand des npn-Transistors zugeschaltet werden kann oder mit dem elektrischen Temperaturanzeigegerät verbunden werden kann. Der Umschalter ist zweckmäßig als Tastschalter ausgebildet, der vor dem Anlassen des Verbrennungsmotors willkürlich und kurz betätigt werden kann.

Die erfindungsgemäße Verwendung des zweiten temperaturabhängigen Widerstandselements, welches fur die Öltemperaturanzeige vorgesehen ist, eignet sich besonders im Zusammenhang mit einem in dem Hohlraum des Ölmeßstabs unterzubringenden verhältnismäßig großflächigen ersten temperaturabhängigen Widerstandselement. Das großflächige temperaturabhängige Widerstandselement ist vorteilhaft auf einem in den Hohlraum des Ölmeßstabs passenden Plättchen hoher Wärmeleitfähigkeit gut wärmeleitend angebracht. Damit wird ein großer Meßeffekt erzielt, da die Wärmeabgabe des ersten temperaturabhängigen Widerstandselements in das Öl im eingetauchten Zustand groß ist. Der zur Unterbringung weiterer elektrischer Bauelemente zur Verfügung stehende Raum in dem Hohlraum des Ölmeßstabs wird aber durch diese Anordnung des ersten temperaturabhängigen Widerstandselements verringert.

Die Erfindung wird im folgenden anhand einer Zeichnung mit drei Figuren erläutert. Es zeigen:

Fig. 1    die Anordnung des ersten und des zweiten temperaturabhängigen Widerstandselements an dem unteren Ende eines Ölmeßstabs, welches vergrößert in einem Längsschnitt dargestellt ist,

Fig. 2    eine Schaltungsanordnung mit dem ersten und dem zweiten temperaturabhängigen Widerstandselement und

Fig. 3    Meßsignale, die von dem ersten temperaturabhängigen Widerstandselement zur Ölfüllstandsüberwachung in Abhängigkeit von der Umgebungstemperatur erzeugt werden.

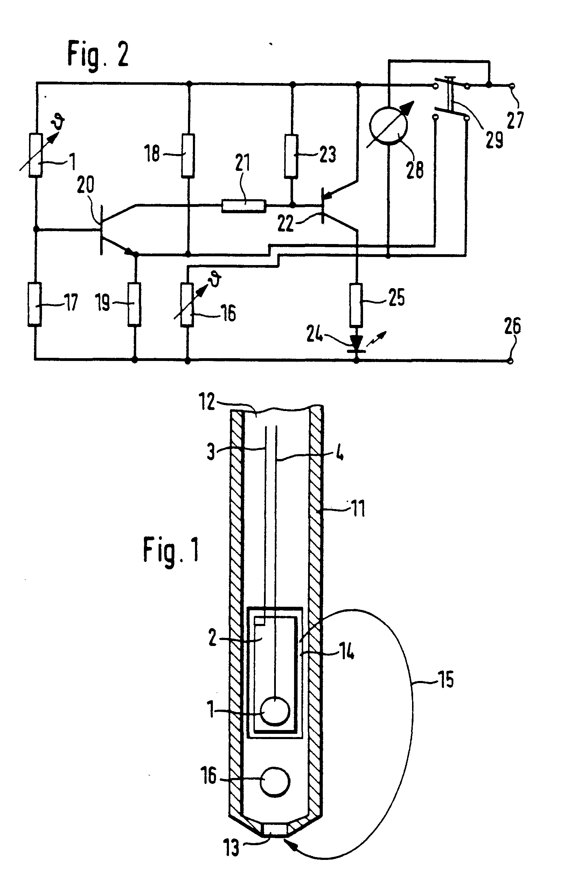

Aus Fig. 1 geht hervor, wie ein unteres Ende eines Ölmeßstabs 11 mit einem Hohlraum 12 ausgeformt ist, welcher in eine untere Öffnung 13 übergeht. Außerdem ist der Ölmeßstab mit einem seitlichen Fenster 14 durchbrochen. Durch die untere Öffnung 13 und das Fenster 14 kann eine Ölzirkulation erfolgen, die mit der Linie 15 angedeutet ist.

In dem Hohlraum des Ölmeßstabs, und zwar im Bereich des Fensters 14, ist ein erstes Widerstandselement 1 mit einem Plättchen (Träger) 2 aus Bronze bzw. aus Keramik angeordnet, das zur Ölfüllstandsüberwachung vorgesehen ist. Die Zuleitungen 3, 4 sind aus dem Ölmeßstab zu der in Fig. 2 dargestellten Auswertungsschaltungsanordnung mit Stromquelle herausgeführt.

In dem untersten Teil des Hohlraums des Ölmeßstabs ist ein zweites temperaturabhängiges Widerstandselement 16 angeordnet, welches einen negativen Temperaturkoeffizienten (NTC) aufweist. Es ist zur Öltemperaturanzeige vorgesehen und wird zusätzlich zur Beeinflussung der Schaltschwelle der Auswertungsschaltungsanordnung nach Fig. 2 verwendet. Die Anschlüsse des zweiten Widerstandselements 16 sind in Fig. 1 nicht dargestellt.

In Fig. 2 umfaßt die Auswertungsschaltungsanordnung eine Brückenschaltung, deren Brückenzweige von dem ersten temperaturabhängigen Widerstandselement 1, einem Vorwiderstand 17, einem Widerstand 18 und einem Emitterwiderstand 19 gebildet werden. In dem Nullzweig der Brückenschaltung ist die Basis-Emitterstrecke eines npn-Transistors 20 angeordnet. Der Emitter dieses Transistors ist also an den gemeinsamen Punkt der Widerstände 18 und 19 angeschlossen. Von dem Kollektor des Transistors 20, der eine erste schaltende Verstärkerstufe mit einem Schwellwert bildet, führt eine Leitung über einen Koppelwiderstand 21 zu einem pnp-Transistor 22 einer zweiten Verstärkerstufe. Ein Basis-Vorwiderstand dieses pnp-Transistors 22 ist mit 23 bezeichnet. In dem Kollektorzweig des pnp-Transistors sind eine Leuchtdiode 24 mit einem zu dieser in Reihe liegenden Widerstand 25 angeschlossen. Die Leuchtdiode dient zur Anzeige des Unterschreitens des Ölfüllstands unter einen vorbestimmten Pegel, der durch die Lage des ersten temperaturabhängigen Widerstandselements in dem Ölmeßstab und damit in dem Verbrennungsmotor bestimmt ist.

Die beschriebene Schaltungsanordnung ist an eine nicht dargestellte Stromquelle an Klemmen 26 und 27 anschließbar.

Die Schaltungsanordnung nach Fig. 2 umfaßt weiterhin einen Schaltungsteil zur Nulltemperaturanzeige, der aus dem zweiten temperaturabhängigen Widerstandselement (NTC) mit negativen Temperaturkoeffizienten 16 und einem Anzeigeinstrument 28 besteht, welches normalerweise im Armaturenbereich des Kraftfahrzeugs angeordnet ist.

Wenn sich ein zweipoliger Tastschalter in seiner in Fig. 2 dargestellten Ruhelage befindet, ist nur ein Stromkreis der Stromquelle an den Klemmen 26, 27 über das Anzeigeinstrument 28 und das zweite temperaturabhängige Widerstandselement 16 geschlossen und es wird, da das zweite temperaturabhängige Widerstandselement, nämlich der NTC-Widerstand, ständig in das Öl eintaucht, dessen Temperatur fortlaufend angezeigt.

Durch Druck auf den Tastschalter 29 wird willkürlich, insbesondere vor Anlassen des Verbrennungsmotors, die Ölfüllstandsüberwachung aktiviert:

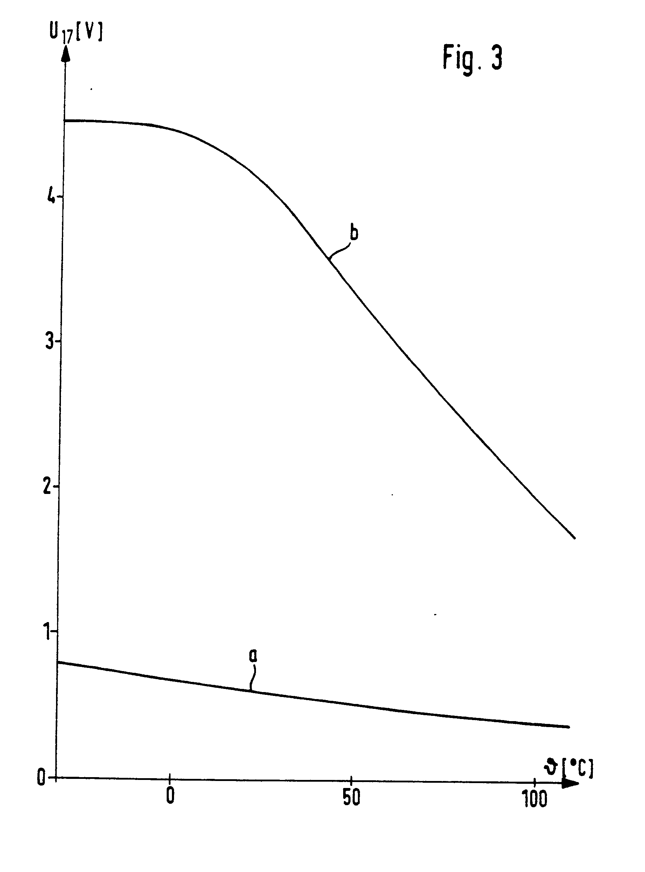

Hierzu werden die Brückenschaltung mit dem Transistor 20 und der nachgeschaltete Transistor 22 an die Stromquelle an den Klemmen 26 und 27 geschaltet. Außerdem wird der zweite temperaturabhängige Widerstand 16 zu dem Emitter-Widerstand 19 parallel geschaltet. Infolge der Temperaturabhängigkeit des ersten temperaturabhängigen Widerstandselements, dem PCT-Widerstand, fällt an dem Vorwiderstand 17 eine Spannung ab, deren grundsätzlicher Verlauf in Fig. 3 dargestellt ist.

In Fig. 3 zeigt Kurve a den Verlauf des Spannungsabfalls an dem Vorwiderstand 17, wenn sich das erste temperaturabhängige Widerstandselement im eingetauchten Zustand befindet, Kurve b ebenfalls den Verlauf des Spannungsabfalls an dem Vorwiderstand 17, wenn das erste temperaturabhängige Widerstandselement, der PTC-Widerstand, aus dem Öl ausgetaucht ist. Beide Kurven zeigen den Verlauf des Spannungsabfalls in Abhängigkeit von der Umgebungstemperatur des ersten temperaturabhängigen Widerstandselements 1.

Wenn das Plättchen 2 mit dem ersten Widerstandselement 1 in Öl eintaucht, wird die in dem Widerstandselement erzeugte Wärme über die Plättchenoberfläche weitgehend an das Öl abgegeben und die Temperatur des Widerstandselements wird relativ niedrig gehalten. Liegt andererseits das Widerstandselement 1 mit dem Plättchen 2 in dem Hohlraum 12 frei in der Luft, so wird nur wenig Wärme von dem Widerstandselement und dem Plättchen an die Umgebung abgegeben und das Widerstandselement wird auf eine relativ hohe Temperatur durch den durch die Zuleitungen 3, 4 fließenden Strom erwärmt.

Mit der Auswertungsschaltungsanordnung, die an die Zuleitungen 3, 4 anzuschließen ist, kann bei niedrigen Öltemperaturen $\vartheta$ ein stark unterschiedlicher Spannungsabfall an dem Widerstandselement festgestellt werden, je nachdem, ob das Widerstandselement 1 sich in eingetauchtem oder ausgetauchtem Zustand befindet: siehe Kurven a und b in Fig. 3, linker Teil.

Ist hingegen die Öltemperatur hoch, so nähern sich die Spannungsabfälle an dem ersten temperaturabhängigen Widerstandselement und damit analog umgekehrt an dem Vorwiderstand 17 an, siehe Kurven a und b in Fig. 3, rechter Teil.

Die Widerstände 18 und 19 - der Widerstand 19 stellt den Emitter-Widerstand des npn-Transistors 20 dar - werden so dimensioniert, daß der Transistor 20 sich in einem ersten (leitenden) Schaltzustand befindet, wenn das erste temperaturabhängige Widerstandselement eingetaucht ist, und in einen zweiten (gesperrten) Schaltzustand gerät, wenn das erste temperaturabhängige Widerstandselement austaucht. Diese Unterscheidung der Spannungen entsprechend den Kurven a und b ist allerdings zuverlässig nur in einem kleinen Umgebungstemperaturbereich $\vartheta$ weiteres gewährleistet.

Um die Schaltschwelle des Transistors 20 entsprechend der Umgebungstemperatur $\vartheta$ nachzuführen, wird daher das zweite temperaturabhängige Widerstandselement, der NTC-Widerstand 16, in der gedrückten Schaltstellung des Tastschalters 28 dem Emitter-Widerstand 19 parallel geschaltet, wenn der Ölfüllstand zu kontrollieren ist. Infolge des negativen Temperaturkoeffizienten des zweiten temperaturabhängigen Widerstandselements 16 ist das Potential an dem Emitter verhältnismäßig hoch, wenn die Temperatur $\vartheta$ klein ist, und das Potential an dem Emitter wird bei steigender Temperatur mehr oder weniger abgesenkt. Somit wird die Schaltschwelle so der Temperatur $\vartheta$ nachgeführt, daß der Transistor 20 zuverlässig seinen ersten oder seinen zweiten Schaltzustand einnimmt, je nachdem, ob das erste temperaturabhängige Widerstandselement eingetaucht ist oder ausgetaucht ist.

Wenn der Transistor 20 leitet, gelangt auch der nachgeschaltete npn-Transistor 22 in seinen leitenden Zustand und die Leuchtdiode 24 leuchtet auf. Im umgekehrten Fall, wenn der Transistor 20, bei Betätigung des Tastschalters 29 nicht aufleuchtet, weil der Transistor 22 sperrt, erkennt der Fahrer, daß der Öl stand zu niedrig ist, und zwar unabhängig von dem Erwärmungszustand des Öls.

## Patentansprüche

1. Einrichtung zur elektrischen Ölfüllstandsüberwachung insbesondere in Kraftfahrzeug-Verbrennungsmotoren, mit einem in einem Hohlraum eines Ölmeßstabs (11) untergebrachten ersten temperaturabhängigen Widerstandselement (1), weiches in Höhe eines Füllstands angeordnet ist, dessen Unterschreiten zu signalisieren ist und dazu an eine Auswertungsschaltungsanordnung mit Stromquelle angeschlossen ist, wobei die Auswertungsschaltungsanordnung bei wenigstens einer Schaltschwelle umschaltet, sowie einem zweiten temperaturabhängigen Widerstandselement (16), welches in dem Ölmeßstab (11) an einer tieferen Stelle als das erste temperaturabhängige Widerstandselement (1) als Teil einer Öltemperaturanzeigeeinrichtung (28) angeordnet ist, wobei das zweite temperaturabhängige Widerstandselement (16) auf die Auswertungsschaltungsanordnung (19) die Schaltschwelle temperaturabhängig korrigierend aufschaltbar ist.

2. Einrichtung nach Anspruch 1, mit einer Brückenschaltung, in deren Nullzweig Steueranschlüsse eines Transistors (20) liegen, der ein das Unterschreiten des Füllstands signalisierendes Signal abgibt und in deren einem Brückenzweig der erste temperaturabhängige Widerstand (1) angeordnet ist, wobei

dadurch gekennzeichnet,

der zweite temperaturabhängige Widerstand (16) an einen der Brückenzweige (19) zuschaltbar ist.

3. Einrichtung nach Anspruch 1, mit einem PTC-Widerstand als ersten temperaturabhängigen Widerstand (1) und einem NTC-Widerstand als zweiten temperaturabhängigen Widerstand (16), wobei in dem Nullzweig der Brückenschaltung eine Basis-Emitterstrecke eines npn-Transistors (20) angeordnet ist, dessen Emitter-Widerstand (19) in einem Brückenzweig liegt, und der NTC-Widerstand (16) zu dem Emitter-Widerstand (19) parallel schaltbar ist.

4. Einrichtung nach Anspruch 2 oder 3, einen Tastschalter (29), durch den der zweite temperaturabhängige Widerstand (16) wahlweise zur Ölfüllstandskontrolle an einen der Brückenzweige (19) zuschaltbar ist oder an ein Temperaturanzeigegerät (28) anschaltbar ist, vorgesehen ist.

**Claims**

1. Device for electrical oil-level monitoring, especially in motor-vehicle internal-combustion engines, with a first temperature-dependent resistance element (1) accommodated in a cavity of an oil dipstick (11) and arranged at the height of a filling level, the falling below of which is to be signalled, and connected for this purpose to an evaluation-circuit arrangement with a current source, the evaluation-circuit arrangement switching over at at least one switching threshold, and with a second temperature-dependent resistance element (16) arranged in the oil dipstick (11) at a lower point than the first temperature-dependent resistance element (1), as part of an oil-temperature indicator device (28), wherein the second temperature-dependent resistance element (16) can be connected to the evaluation-circuit arrangement (19) so as to correct the switching threshold as a function of temperature.

2. Device according to Claim 1, with a bridge connection, in the zero branch of which are control terminals of a trans istor (20) emitting a signal signalling that the filling level has fallen belov the desired value and in one bridge branch of which the first temperaturedependent resistor (1) is arranged, wherein the second temperature-dependent resistor (16) can be connected to one of the bridge branches (19).

3. Device according to Claim 1, with a PTC resistor as a first temperature-dependent resistor (1) and with an NTC-resistor as a second temperature-dependent resistor (16), wherein arranged in the zero branch of the bridge connection is a base/emitter section of an npn-transistor (20), the emitter resistor (19) of which is located in a bridge branch, and the NTC-resistor (16) can be connected in parallel with the emitter resistor (19).

4. Device according to Claim 2 or 3, wherein a touch-contact switch (29), by means of which the second temperature-dependent resistor (16) can be connected selectively, for an oil-level check, to one of the bridge branches (19) or to a temperature indicator (28) is provided.

**Revendications**

1. Dispositif de surveillance ou de contrôle électrique du niveau d'huile, notamment dans les moteurs à combustion interne de véhicules, ce dispositif comportant, d'une part un premier élément (1) à résistance fonction de la température, qui est logé dans une cavité d'une jauge (11) d'huile, qui est disposé à la hauteur d'un niveau dont il faut signaler la diminution, et qui, à cet effet, est connecté à un montage à circuit analyseur comportant une de courant, ce circuit changeant d'état au moins un seuil d'inversion et d'autre part un second élément (16) à résistance fonction de la température, qui est disposé dans la jauge plus bas que le premier élément (1) et qui fait partie d'un dispositif (28) indiquant la température de l'huile, dispositif de contrôle dans lequel ce second élément (16) à résistance fonction de la température peut être connecté au circuit analyseur (19) en corrigeant le seuil d'inversion en fonction de la température.

2. Dispositif selon la revendication 1, comportant un circuit en pont dans la branche neutre duquel se trouvent les bornes de commande d'un transistor (20) qui délivre un signal indiquant que le niveau est inférieur à la valeur prédéterminée et dans une branche duquel la première résistance (1) fonction de la température est disposée, dispositif dans lequel la seconde résistance (16), fonction de la température, peut être connectée à l'une (19) des branches du pont.

3. Dispositif selon la revendication 1, comportant comme première résistance (1) fonction de la température une résistance à CTP et comme seconde résistance (16) fonction de la température une résistance à CTN, dans lequel la liaison base-émetteur d'un transistor 20 npn est disposée dans la branche neutre du circuit en pont, la résistance 19 d'émetteur de ce transistor se trouvant dans une branche de ce circuit en pont et la résistance (16) à CTN peut être connectée en parallèle avec cette résistance (19) d'émetteur.

4. Dispositif selon la revendication 2 ou 3, dans lequel il est prévu un commutateur (29) à bouton-poussoir, grâce auquel la seconde résistance (16) fonction de la température, peut être connectée à volonté à l'une (19) des branches du circuit en pont pour contrôler le niveau de l'huile ou à un appareil (28) indiquant la température.

Fig. 2

Fig. 1

Fig. 3